# EUROPEAN PATENT APPLICATION

(11) **EP 4 084 164 A2**
(43) Date of publication of application: **02.11.2022**
(21) Application number: 22168099.4
(22) Date of filing: 13.04.2022
(51) Int. Cl.: H01M 8/04119, H01M 8/04664, H01M 8/04746, H01M 8/04858

(54) **FUEL CELL SYSTEM AND FLYING OBJECT INCLUDING THE FUEL CELL SYSTEM**

(30) Priority: 28.04.2021 JP 2021076646
(71) Applicant: TOYOTA JIDOSHA KABUSHIKI KAISHA, Toyota-shi, Aichi-ken, 471-8571 (JP)
(72) Inventor: KANEKO, Tomohiko, Toyota-shi, 471-8571 (JP)
(74) Representative: J A Kemp LLP

(57) **Abstract**

To provide a fuel cell system capable of discharging a fuel gas in an emergency while suppressing complication and an increase in cost of the system. The fuel cell system includes a fuel cell, a fuel gas tank, a fuel gas supply channel, a fuel gas supply unit, a main stop valve that controls opening and closing of the fuel gas tank, a fuel gas discharge channel, an exhaust drain valve that controls discharge of the fuel gas discharged from the fuel cell to an outside of the system, and a control unit. The control unit controls the exhaust drain valve, the fuel gas supply unit, and the main stop valve to open so as to discharge the fuel gas from the fuel gas tank when receiving an emission command of the fuel gas.

## Description

### FIELD

The present application relates to a fuel cell system and a flying object including the fuel cell system.

### BACKGROUND

A fuel cell system is a system for generating electric power by supplying a fuel gas and an oxidant gas to a fuel cell. In general, the fuel cell system includes a fuel cell, a fuel gas supply unit that supplies a fuel gas to an anode of the fuel cell, and an oxidant gas supply unit that supplies an oxidant gas to a cathode of the fuel cell.

Recently, the development of a flying object with a fuel cell system has been promoted. For example, a fuel cell system provided in an airplane described in Patent Document 1 is configured to be operated when power supply to a consumption unit on the airplane is insufficient. A fuel cell system provided in an airplane described in Patent Document 2 is used as a main power supply, an auxiliary power supply, and the like.

### CITATION LIST

Patent Literature 1: JP 2008-532253 A
Patent Literature 2: JP 2000-25696 A

### SUMMARY

### Technical Problem

Fuel cell systems provided in a flying object may discharge fuel gases in an emergency. Normally, in preparation for such a case, it is conceivable to add a control valve to a tank valve of a fuel gas tank. However, complication and an increase in cost of the system due to the addition of the control valve are concerned.

Accordingly, in view of the above circumstances, it is a main object of the present application to provide a fuel cell system capable of discharging a fuel gas in an emergency while suppressing the complication and the increase in cost of the system.

### Solution to Problem

In the present disclosure, as one means for solving the above problems, a fuel cell system is provided. The fuel cell system includes a fuel cell, a fuel gas tank that stores a fuel gas, a fuel gas supply channel that connects the fuel cell to the fuel gas tank, a fuel gas supply unit disposed in the fuel gas supply channel to supply the fuel gas to the fuel cell, a main stop valve disposed between the fuel gas tank and the fuel gas supply unit in the fuel gas supply channel to control opening and closing of the fuel gas tank, a fuel gas discharge channel connected to the fuel cell, an exhaust drain valve disposed in the fuel gas discharge channel to control discharge of the fuel gas discharged from the fuel cell to the outside of the system, and a control unit. The control unit controls the exhaust drain valve, the fuel gas supply unit, and the main stop valve to open, so as to discharge the fuel gas from the fuel gas tank when receiving an emission command of the fuel gas.

The fuel cell system may include an oxidant gas supply channel connected to the fuel cell, an oxidant gas supply unit disposed in the oxidant gas supply channel to supply an oxidant gas to the fuel cell, and an oxidant gas discharge channel connected to the fuel cell. The fuel gas discharge channel may have one end connected to the fuel cell and another end connected to the oxidant gas discharge channel, the fuel gas discharged from the fuel cell may be passed through the fuel gas discharge channel to be discharged out of the system from the oxidant gas discharge channel, and the control unit may control the oxidant gas supply unit so as to supply the oxidant gas to the fuel cell when receiving the emission command of the fuel gas.

In the fuel cell system, the control unit may control the main stop valve, the fuel gas supply unit, and the exhaust drain valve to close when an amount of the fuel gas stored in the fuel gas tank becomes below a predetermined threshold value after receiving the emission command of the fuel gas.

Further, the control unit may control the exhaust drain valve, the fuel gas supply unit, and the main stop valve to open in this order when receiving the emission command of the fuel gas, and may control the main stop valve, the fuel gas supply unit, and the exhaust drain valve to close in this order when the fuel gas amount stored in the fuel gas tank becomes below the predetermined threshold value after receiving the emission command of the fuel gas.

In addition, the control unit may control the fuel cell system to increase power generated by the fuel cell when receiving the emission command of the fuel gas.

As one means for solving the above problem, the present disclosure provides a flying object including the above-described fuel cell system.

### Effect

The present disclosure is intended to control the exhaust drain valve, the fuel gas supply unit, and the main stop valve to open when receiving the emission command of the fuel gas. Thus, it is possible to smoothly perform the discharge of the fuel gas in an emergency without providing an additional control valve in the fuel gas tank. Accordingly, according to the present disclosure, it is possible to smoothly discharge the fuel gas in an emergency while suppressing complication and an increase in cost of the system.

### BRIEF DESCRIPTION OF DRAWINGS

Fig. 1 is a block diagram of a fuel cell system 100.
Fig. 2 is an example of a processing routine of a control unit 50.

### DESCRIPTION OF EMBODIMENTS

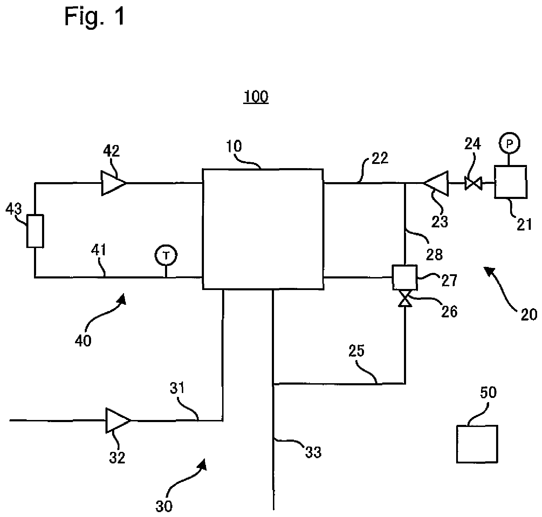

A fuel cell system of the present disclosure will be described with reference to a fuel cell system 100 as an embodiment. Fig. 1 is a block diagram showing the fuel cell system 100 in a simplified manner.

The fuel cell system 100 is provided in a flying object. The flying object capable of including the fuel cell system 100 is not particularly limited as long as it is an object capable of flying in the air. For example, the flying object includes a typical airplane and an airplane such as a light aircraft and a drone. Further, the fuel cell system 100 may be provided not only in the flying object but also in a vehicle or the like.

As shown in Fig. 1, the fuel cell system 100 includes a fuel cell 10, a fuel gas pipe unit 20, an oxidant gas pipe unit 30, a cooling water pipe unit 40, and a control unit 50.

### <Fuel cell 10>

The fuel cell 10 is formed by stacking a plurality of single fuel cells (sometimes simply referred to as "single cells") in series. The single cell includes an electrolyte membrane, an anode disposed on one side of the electrolyte membrane, and a cathode disposed on the other side of the electrolyte membrane. Specifically, a catalyst layer is disposed on both sides of the electrolyte membrane, a diffusion layer is disposed outside the catalyst layer, a separator is further disposed outside the diffusion layer, and a fuel gas channel and an oxidant gas channel are formed on the separator. The fuel cell has a general configuration. Here, in the fuel cell, the catalyst layer and the diffusion layer function as an anode or a cathode.

The electrolyte membrane, the catalyst layer, the diffusion layer, and the separator disposed in the fuel cell are not particularly limited, and any known one can be used. Examples of the electrolyte membrane include an ion exchange membrane made of a solid polymer material. Examples of the catalyst layer include a platinum-based catalyst. Examples of the diffusion layer include a porous material, such as a carbon material. Examples of the separator include a metal material, such as stainless steel, and a carbon material, such as a carbon composite material.

In the fuel cell 10, a fuel gas is supplied to the anode, and an oxidant gas is supplied to the cathode, thus causing an electrochemical reaction to generate power. The generated current is used in, for example, various power loads of the flying object (such as a motor for driving a propeller) or stored in a battery provided separately.

### <Fuel gas pipe unit 20>

The fuel gas pipe unit 20 is for supplying the fuel gas to the anode of the fuel cell 10. The fuel gas pipe unit 20 includes a fuel gas tank 21, a fuel gas supply channel 22, a fuel gas supply unit 23, a main stop valve 24, a fuel gas discharge channel 25, and an exhaust drain valve 26. Further, as shown in Fig. 1, the fuel gas pipe unit 20 may include a gas-liquid separator 27 and a circulation channel 28. Furthermore, the fuel gas pipe unit 20 may be provided with other members generally provided in the fuel gas pipe unit.

The fuel gas tank 21 stores a fuel gas. The fuel gas includes a hydrogen gas, a reformed gas, and the like. When the fuel gas is a hydrogen gas, the fuel gas tank 21 may be composed of, for example, a high pressure hydrogen tank or a hydrogen absorbing alloy. The pressure of the hydrogen gas may be, for example, in a range of 35 MPa to 70 MPa. When the fuel gas is a reformed gas, the fuel gas tank 21 may be composed of, for example, a reformer for generating a hydrogen-rich reformed gas from a hydrocarbon-based fuel, and a high pressure gas tank for accumulating the reformed gas generated by the reformer in a high pressure state. In addition, one fuel gas tank 21 may be used, and a plurality of fuel gas tanks 21 may be used.

The fuel gas tank 21 is provided with a fuel gas sensor P for measuring an amount of the fuel gas stored (fuel gas pressure), and the fuel gas sensor P measures the amount of the fuel gas in the fuel gas tank 21 at any time. The measurement result of the fuel gas sensor P is transmitted to the control unit 50.

The fuel gas supply channel 22 is a pipe for connecting the fuel cell 10 to the fuel gas tank 21 and is a channel for allowing the fuel gas to be supplied to the fuel cell 10.

The fuel gas supply unit 23 is provided in the fuel gas supply channel 22 for supplying the fuel gas to the fuel cell 10. The fuel gas supply unit 23 is not particularly limited, and examples thereof include an injector, a regulator, a solenoid valve, and the like. There may be one fuel gas supply unit 23, and may be a plurality of fuel gas supply units 23. When the plurality of fuel gas supply units 23 are provided, the fuel gas supply units 23 may be provided in series with respect to the fuel gas supply channel 22, or may be provided in parallel. The fuel gas supply unit 23 controls the flow rate and pressure of the fuel gas supplied to the fuel cell 10.

The main stop valve 24 is provided between the fuel gas tank 21 and the fuel gas supply unit 23 in the fuel gas supply channel 22, and controls opening and closing of the fuel gas tank. Normally, the main stop valve 24 is provided in a tank valve connected to the fuel gas tank 21. Other shut-off valves or the like may be provided in the tank valve.

The fuel gas discharge channel 25 is a pipe connected to the fuel cell 10, and is a channel for allowing the fuel gas discharged from the fuel cell 10 and water generated by an electrochemical reaction to be flowed. Specifically, one end of the fuel gas discharge channel 25 is connected to the fuel cell 10, and the other end is connected to an oxidant gas discharge channel 33. The fuel gas and water discharged from the fuel cell 10 are passed through the fuel gas discharge channel 25 to be discharged out of the system from the oxidant gas discharge channel 33.

The exhaust drain valve 26 is provided in the fuel gas discharge channel 25, and controls discharge of the fuel gas and water discharged from the fuel cell 1 0 to the outside of the system. For example, opening and closing of the exhaust drain valve 26 is controlled when the water separated by the gas-liquid separator 27 is discharged and when the fuel gas is discharged to adjust the fuel gas concentration in the fuel gas pipe unit 20. Furthermore, the opening and closing is also controlled in the case of discharging the fuel gas in an emergency as described later.

The gas-liquid separator 27 is a member provided between the fuel cell 10 and the exhaust drain valve 26 in the fuel gas discharge channel 25. The gas-liquid separator 27 separates a gas component (e.g., a fuel gas) and a liquid component (e.g., water) in a fuel off-gas discharged from the fuel cell 10. The separated gas component is circulated into the circulation channel 28. The separated liquid component is discharged together with the gas component. A known gas-liquid separator can be used as the gas-liquid separator 27.

The circulation channel 28 is a pipe for connecting the gas-liquid separator 27 to the fuel gas supply channel 22 (specifically, the fuel gas supply channel 22 on the downstream side of the fuel gas supply unit 23) and is a channel for circulating the gas component separated by the gas-liquid separator 27 (circulating gas) to the fuel gas supply channel 22. A pump or the like may be provided in the circulation channel 28 as power for recirculating the circulating gas.

### <Oxidant gas pipe unit 30>

The oxidant gas pipe unit 30 is for supplying an oxidant gas to the cathode. The oxidant gas pipe unit 30 includes an oxidant gas supply channel 31, an oxidant gas supply unit 32, and an oxidant gas discharge channel 33. Further, although not shown in Fig. 1, an air cleaner for removing impurities contained in the oxidant gas, an intercooler for controlling the temperature of the oxidant gas, and a humidifier for controlling the humidity of the oxidant gas may be provided. Further, the oxidant gas pipe unit 30 may be provided with other members generally provided in the fuel gas pipe unit. Here, the oxidant gas is, for example, air.

The oxidant gas supply channel 31 is a pipe connected to the fuel cell 10, and is a channel for allowing the oxidant gas supplied to the fuel cell 10 to be flowed.

The oxidant gas supply unit 32 is provided in the oxidant gas supply channel 31 to supply the oxidant gas to the fuel cell 10. The oxidant gas supply unit 32 is not particularly limited, and examples thereof include an air compressor.

The oxidant gas discharge channel 33 is a pipe connected to the fuel cell 10, and is a channel for allowing the oxidant gas (oxidant off-gas) discharged from the fuel cell 10 to be flowed. Here, as described above, the oxidant gas discharge channel 33 is connected to the other end of the fuel gas discharge channel 25 in the middle of the channel. Therefore, the fuel gas and water discharged from the fuel cell 10 are also passed through the fuel gas discharge channel 25 to be discharged out of the system from the oxidant gas discharge channel 33.

### <Cooling water pipe unit 40>

The cooling water pipe unit 40 is for cooling the fuel cell 10 via cooling water. The cooling water pipe unit 40 includes a cooling water channel 41, a radiator 42, and a cooling water supply unit 43. Further, the cooling water pipe unit 40 may be provided with other members generally provided in the cooling water pipe unit.

The cooling water channel 41 connects an inlet to an outlet of a cooling water channel of the fuel cell 10, and is a pipe for circulating the cooling water. The radiator 42 performs heat exchange between the cooling water flowing through the cooling water channel 41 and the outside air to cool the cooling water. The cooling water supply unit 43 is power for circulating the cooling water through the cooling water channel 41.

The cooling water channel 41 includes a cooling water temperature measuring unit T that measures a temperature of the cooling water on the outlet side of the cooling water channel of the fuel cell 10. The cooling water discharged from the cooling water channel of the fuel cell 10 is sufficiently heat exchanged with the fuel cell 10, and has a temperature equivalent to the temperature of the fuel cell 10. Therefore, measuring the temperature of the cooling water allows measuring the temperature of the fuel cell 10. The measurement result by the cooling water temperature measuring unit T is transmitted to the control unit 50.

### <Control unit 50>

The control unit 50 is a computer system including a CPU, a ROM, a RAM, an input-output interface, and the like, and controls each unit of the fuel cell system 100.

The control unit 50 opens the exhaust drain valve 26, the fuel gas supply unit 23, and the main stop valve 24 to control to discharge the fuel gas from the fuel gas tank 21 when receiving an emission command of the fuel gas as one feature.

The emission command of the fuel gas is a command to be issued in an emergency, for reducing the amount of the fuel gas stored in the fuel gas tank 21 as much as possible. The emergency incudes a case of detecting an abnormal temperature of the fuel cell 10, a case of detecting leakage of a predetermined amount of cooling water in the fuel cell 10 and the cooling water pipe unit 40, a case when the airframe is damaged, a case of fire, or the like. The leakage of the cooling water is detected, for example, when the value of rotation torque in the cooling water supply unit 43 is smaller than a predetermined threshold value while the cooling water flows in the cooling water channel 41 at a predetermined flow rate. The emission command of the fuel gas is issued when the control unit has detected these facts or when an operator has confirmed these facts.

When the fuel cell system 100 is provided with the above features, it is possible to smoothly discharge the fuel gas in an emergency without providing an additional control valve in the fuel gas tank 21. Therefore, the fuel cell system 100 ensures discharging the fuel gas in an emergency while suppressing complication and an increase in cost of the system.

The control unit 50 may control the oxidant gas supply unit 32 so as to supply the oxidant gas to the fuel cell 10 when receiving the emission command of the fuel gas. Thus, since the oxidant gas flows from the oxidant gas discharge channel 33 toward the outside of the system, it is possible to suppress the fuel gas flowing back from the oxidant gas discharge channel 33 to the fuel cell 10 during the fuel gas discharge. Here, it is preferred that the control of the oxidant gas supply unit 32 is performed before opening the exhaust drain valve 26, the fuel gas supply unit 23, and the main stop valve 24.

The control unit 50 may control the main stop valve 24, the fuel gas supply unit 23, and the exhaust drain valve 26 to close when the amount of the fuel gas stored in the fuel gas tank 21 becomes lower than a predetermined threshold value after receiving the emission command of the fuel gas. This suppresses unexpected reverse flow to ensure the suppressed entry of foreign matter into the fuel gas pipe unit 20. Here, the predetermined threshold value is calculated from a distance from a current location to an end location. In a case where the plurality of fuel gas tanks 21 are provided, when the fuel gas amount of all of the plurality of fuel gas tanks 21 becomes below the predetermined threshold value, it is preferred to control the main stop valve 24, the fuel gas supply unit 23, and the exhaust drain valve 26 to close.

The control unit 50 may control the exhaust drain valve 26, the fuel gas supply unit 23, and the main stop valve 24 to open in this order when receiving the emission command of the fuel gas, and the control unit 50 may control the main stop valve 24, the fuel gas supply unit 23, and the exhaust drain valve 26 to close in this order when the amount of the fuel gas stored in the fuel gas tank becomes lower than the predetermined threshold value after receiving the emission command of the fuel gas. Thus, at the time of the discharge of the fuel gas and at the time of its stop, controlling the order of opening or closing in a predetermined order allows suppressing a pressure rise of the fuel cell 10 and the fuel gas pipe unit 20 (e.g., the fuel gas supply channel 22, the fuel gas discharge channel 25, and the circulation channel 28).

The control unit 50 may control the fuel cell system 100 to increase the power generated by the fuel cell 10 when receiving the emission command of the fuel gas. The control increases the amounts of operation of the members provided in the fuel cell system 100. For example, a member for increasing the amount of operation is not particularly limited. For example, the operation amounts of the oxidant gas supply unit 32, the cooling water supply unit 43, a circulation pump provided in the circulation channel 28, and the radiator 42, and/or the operation amounts of another heater, air conditioner, or the like (optional member) (not shown) may be increased. This ensures promoting consumption of the fuel gas.

After having closed the main stop valve 24, the fuel gas supply unit 23, and the exhaust drain valve 26 after receiving the emission command of the fuel gas, the control unit 50 may open the main stop valve 24 or the like to perform the power generation of the fuel cell 10 again.

As described above, the control mode by the control unit 50 when receiving the emission command of the fuel gas has been described. Hereinafter, control of the control unit 50 will be further described using an example of a processing routine.

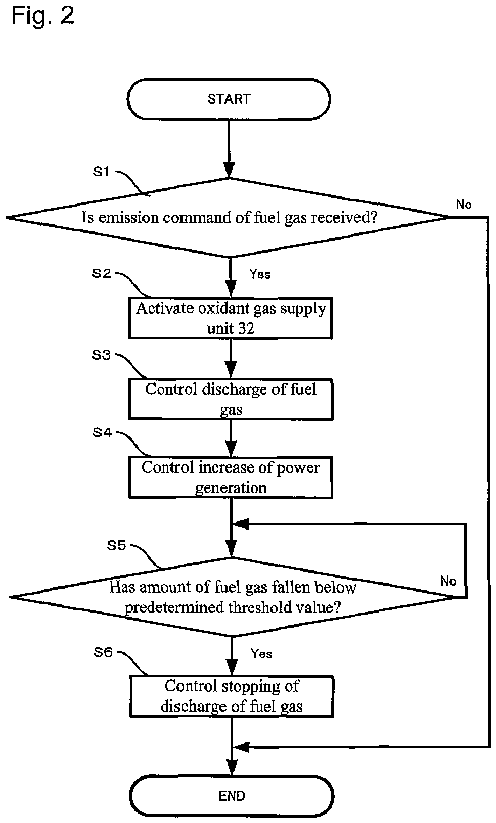

Fig. 2 shows an example of the processing routine of the control unit 50. As shown in Fig. 2, the control unit 50 includes Processes S1 to S7, and the control unit 50 repeatedly performs these processes.

In Process S1, it is judged whether the control unit 50 has received the emission command of the fuel gas. When the control unit 50 has received the emission command of the fuel gas, the control unit 50 performs Process S2.

In Process S2, the control unit 50 activates the oxidant gas supply unit 32 to control the oxidant gas so as to flow from the oxidant gas discharge channel 33 toward the outside of the system.

In Process S3, the control unit 50 opens the exhaust drain valve 26, the fuel gas supply unit 23, and the main stop valve 24, and controls to discharge the fuel gas from the fuel gas tank 21. At this time, it is preferred to open the exhaust drain valve 26, the fuel gas supply unit 23, and the main stop valve 24 in this order.

In Process S4, the control unit 50 controls the fuel cell system 100 to increase the power generated by the fuel cell 10.

In process S5, the control unit 50 determines whether the amount of the fuel gas stored in the fuel gas tank 21 has fallen below the predetermined threshold value. When the amount of the fuel gas stored in the fuel gas tank 21 is lower than the predetermined threshold value, Process S6 is then performed.

In Process S6, the control unit 50 controls the main stop valve 24, the fuel gas supply unit 23, and the exhaust drain valve 26 to close to stop the discharge of the fuel gas. At this time, it is preferred to control the main stop valve 24, the fuel gas supply unit 23, and the exhaust drain valve 26 to close in this order.

As described above, the fuel cell system of the present disclosure has been described with reference to the fuel cell system 100 as an embodiment. The fuel cell system of the present disclosure is preferably used in a flying object, but may be used in a vehicle or the like.

### Reference Signs List

10 Fuel cell
20 Fuel gas pipe unit
21 Fuel gas tank
22 Fuel gas supply channel
23 Fuel gas supply unit
24 Main stop valve
25 Fuel gas discharge channel
26 Exhaust drain valve
27 Gas-liquid separator
28 Circulation channel
30 Oxidant gas pipe unit
31 Oxidant gas supply channel
32 Oxidant gas supply unit
33 Oxidant gas discharge channel
40 Cooling water pipe unit
41 Cooling water channel
42 Radiator
43 Cooling water supply unit
50 Control unit
100 Fuel cell system

## Claims

1. A fuel cell system comprising:
a fuel cell;
a fuel gas tank that stores a fuel gas;
a fuel gas supply channel that connects the fuel cell to the fuel gas tank;
a fuel gas supply unit disposed in the fuel gas supply channel to supply the fuel gas to the fuel cell;
a main stop valve disposed between the fuel gas tank and the fuel gas supply unit in the fuel gas supply channel to control opening and closing of the fuel gas tank;
a fuel gas discharge channel connected to the fuel cell;
an exhaust drain valve disposed in the fuel gas discharge channel to control discharge of the fuel gas discharged from the fuel cell to an outside of the system; and
a control unit, wherein
the control unit controls the exhaust drain valve, the fuel gas supply unit, and the main stop valve to open, so as to discharge the fuel gas from the fuel gas tank when receiving an emission command of the fuel gas.

2. The fuel cell system according to claim 1, comprising:
an oxidant gas supply channel connected to the fuel cell;
an oxidant gas supply unit disposed in the oxidant gas supply channel to supply an oxidant gas to the fuel cell; and
an oxidant gas discharge channel connected to the fuel cell, wherein
the fuel gas discharge channel has one end connected to the fuel cell and another end connected to the oxidant gas discharge channel,
the fuel gas discharged from the fuel cell is passed through the fuel gas discharge channel to be discharged out of the system from the oxidant gas discharge channel, and
the control unit controls the oxidant gas supply unit so as to supply the oxidant gas to the fuel cell when receiving the emission command of the fuel gas.

3. The fuel cell system according to claim 1 or 2, wherein
the control unit controls the main stop valve, the fuel gas supply unit, and the exhaust drain valve to close when an amount of the fuel gas stored in the fuel gas tank becomes below a predetermined threshold value after receiving the emission command of the fuel gas.

4. The fuel cell system according to any one of claims 1 to 3, wherein
the control unit:
controls the exhaust drain valve, the fuel gas supply unit, and the main stop valve to open in this order when receiving the emission command of the fuel gas; and
controls the main stop valve, the fuel gas supply unit, and the exhaust drain valve to close in this order when the amount of the fuel gas stored in the fuel gas tank becomes below the predetermined threshold value after receiving the emission command of the fuel gas.

5. The fuel cell system according to any one of claims 1 to 4, wherein
the control unit controls the fuel cell system to increase power generated by the fuel cell when receiving the emission command of the fuel gas.

6. A flying object comprising the fuel cell system according to any one of claims 1 to 5.
